# EUROPEAN PATENT SPECIFICATION

(11) **EP 0 390 927 B1**
(45) Date of publication and mention of the grant of the patent: **02.03.1994**
(21) Application number: 89910195.0
(22) Date of filing: 12.09.1989
(51) Int. Cl.: H02K 23/60, H02K 7/10

(54) **ROTARY MACHINE**
ROTIERENDE VORRICHTUNG
MACHINE ROTATIVE

(30) Priority: 14.09.1988 JP 120665/88 U
(43) Date of publication of application: 10.10.1990
(73) Proprietor: SAKAI, Hirozumi, Aichi 471 (JP)
(72) Inventor: SAKAI, Hirozumi, Aichi 471 (JP)
(74) Representative: Huntingford, David Ian
(86) International application number: JP8900931
(87) International publication number: WO9003061

(56) References cited:
- AU-A- 484 944
- DE-A- 2 840 222
- DE-A- 2 937 754
- PATENT ABSTRACTS OF JAPAN vol. 9, no. 23 (E-293)(1746) 30 January 1985, & JP-A-59 169353

## Description

The present invention relates to rotary machines and more particularly to a rotary machine where a stator is rotatable and the rotating output of the stator is taken to the outside or a rotating force can be supplied to the stator from the outside.

In the prior art, as known well, in a rotary machine such as a motor, the stator is usually fixed and mounted to a support body (housing) and is not rotated.

Rotating motion of the rotor is performed in that magnetic repulsion and attraction force due to the magnetic poles of the stator acts as torque on the rotor, and at the same time, the magnetic repulsion and attraction force due to magnetic poles of the rotor also acts on the stator. In the fixed-stator motor, the force acting on the rotor is, so to speak, absorbed by the support body.

According to DE-A- 2937754 there is also known a rotary machine which comprises a support body, a stator rotatably supported by the support body and having an input/output shaft, a rotor rotatably supported by the stator and having an input/output shaft, a power transmission means adapted to supply power to the rotor/stator to cause the rotor and stator to seek to rotate in opposite directions to each other, and a tilting lever braking mechanism which enables this support body to be selectively coupled to the stator or the rotor. By means of the tilting braking mechanism, it is possible to rapidly stop the rotor shaft or to hold the stator relative to the support body. Starting current can be reduced by braking the rotor shaft and simultaneously releasing the stator shaft using the tilting brake mechanism. For assisting starting, when the nominal rotational speed of the stator is achieved, the stator shaft is slowly braked by the tilting brake mechanism and the rotor shaft is simultaneously released.

It is an object of the present invention to improve further the latter type of machine wherein the rotor and stator are capable of relative rotation.

In accordance with the present invention, there is provided a rotary machine comprising a support body; a stator rotatably supported by the support body and having an input/output shaft; a rotor rotatably supported by the stator and having an input/output shaft; a power transmission means adapted to supply power to the rotor or the stator to cause the rotor and stator to seek to rotate in opposite directions to each other; a first coupling means positioned between the support body and the stator for selectively coupling the stator to the support body; and a second coupling means positioned between the stator and the rotor for selectively coupling the stator to the rotor.

The invention is described further hereinafter, by way of example only, with reference to the accompanying drawings, in which:-
Fig.1 is a sectional view of one embodiment of a rotary machine in accordance with the present invention;
Fig.2 is an electric equivalent circuit diagram of the first embodiment;
Fig.3 is an operation explanation diagram for the first embodiment;
Fig.4 is a sectional view of a second embodiment of a rotary machine in accordance with the present invention; and
Fig.5 is a sectional view of a third embodiment of a rotary machine in accordance with the present invention.

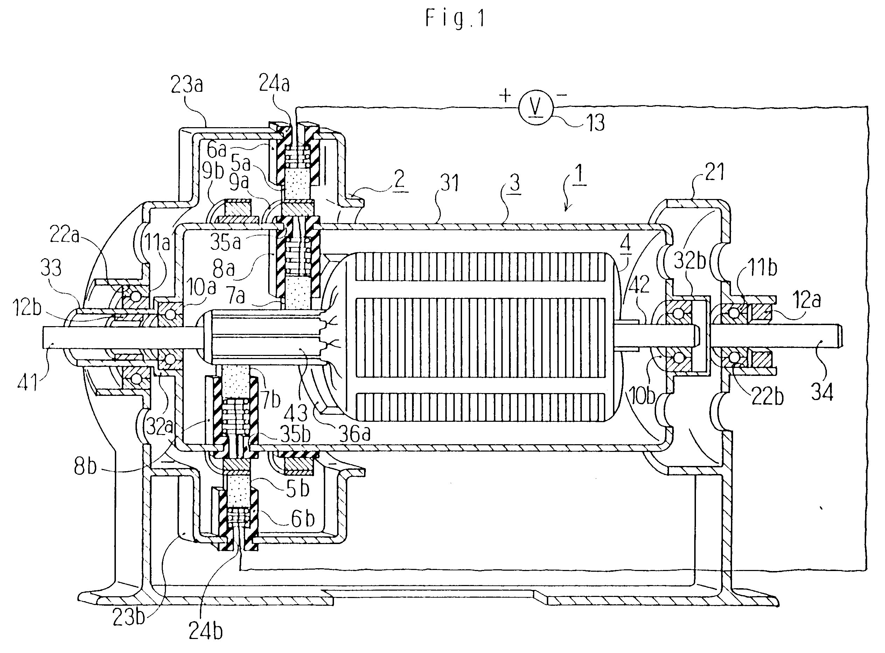

The rotary machine 1 shown in Fig.1 is a two-pole DC motor, having a support body (housing) 2, a stator 3, a rotor 4, brushes fixed to the housing 2 (housing brushes) 5a,5b, housing brush holders 6a,6b, brushes fixed to the stator 3 (stator brushes) 7a,7b, stator brush holders 8a,8b, slip rings 9a,9b, bearings for supporting the rotor 4 (rotor bearings) 10a,10b, bearings for supporting the stator 3 (stator bearings) 11a,11b), and clutch mechanisms 12a,12b.

A drum-shaped body member 21 of the housing 2 is provided at the centre portion of its left-hand end surface (as viewed in Fig.1) with a hole 22a for mounting one stator bearing 11a, and on the other hand the body member 21 is provided at the centre portion of its right-hand end surface with a hole 22b for mounting the other stator bearing 11b and the clutch mechanism 12a. A first housing brush-enclosing member 23a is provided on the upper left-hand side of the body member 21, and a second housing brush-enclosing member 23b lies on the lower left-hand side thereof, respectively. The enclosing member 23a is provided with a housing brush holder mounting hole 24a, and other enclosing member 23b is provided with another housing brush holder mounting hole 24b along the axial line at a suitable distance.

An enclosing member 32a for enclosing the rotor bearing 10a and the clutch mechanism 12a is provided at the centre portion of the left-hand end surface of the drum-shaped body member 31 of the stator 3, and a hollow cylindrical shaft 33 supported by the stator bearing 11a is provided at the left-hand end portion of the enclosing member 32a. On the other hand, a second rotor bearing enclosing member 32b is provided at the centre portion of the right-hand end surface of the body member 31, and an output shaft supported by other stator bearing 11b (stator output shaft) 34 is provided at the right-hand end surface of the enclosing member 32b. The hollow cylindrical shaft 33 and the stator output shaft 34 are positioned on the same axis. Thus the stator 3 is rotatable with respect to the housing 2.

Respective stator brush holder mounting holes 35a,35b are provided at the left-hand side of the stator body member 31 at positions on the axial line opposed to the housing brushes 5a,5b and at positions on the circumference having a phase difference of 180°.

Permanent magnets 36a,36b forming N-pole and S-pole of a two-pole field system are fixed on the inner circumferential surface of the body member 31. The permanent magnets 36a,36b have a phase difference of 90° with respect to the stator brushes 7a,7b.

A rotating shaft 41 at the left-hand end of the rotor 4 (rotor output shaft) is supported by the rotor bearing 10a, and a rotary shaft 42 at the right-hand end (rotor rotating shaft) is supported by the other rotor bearing 10b. Consequently, the rotor 4 can rotate independently of the rotation of the stator 3.

The housing brush 5a is electrically connected, for example, to the positive pole of the DC power source 13, and makes sliding contact with the slip ring 9a installed in ring form around the stator drum-shaped body member 31. On the other hand, the other housing brush 5b is electrically connected to the negative pole of the DC power source 13 and makes sliding contact with the other slip ring 9b. The slip ring 9a is electrically connected to the stator brush 7a, and the other slip ring 9b is electrically connected to the other stator brush 7b. The stator brushes 7a,7b make sliding contact with a commutator 43 of the rotor 4. Consequently, the positive pole of the DC power source 13 supplies the positive voltage to the commutator 43 through the housing brush 5a, the slip ring 9a and the stator brush 7a. On the other hand, the negative pole supplies the negative voltage to the commutator 43 through the other housing brush 5b, the other slip ring 9b and the other stator brush 7b. Armature current is thereby supplied to an armature coil 44 of the rotor 4 and magnetomotive force is generated in the rotor 4.

The clutch mechanisms 12a,12b each comprise an electromagnetic clutch of, for example, the one-way type. Electric power for the clutch mechanism 12a is supplied thereto from the power source 13 through a switch circuit (not shown) directly, and the electric power for the clutch mechanism 12b is supplied thereto from a switch circuit, the brush 5a, and the slip ring 9a or 9b.

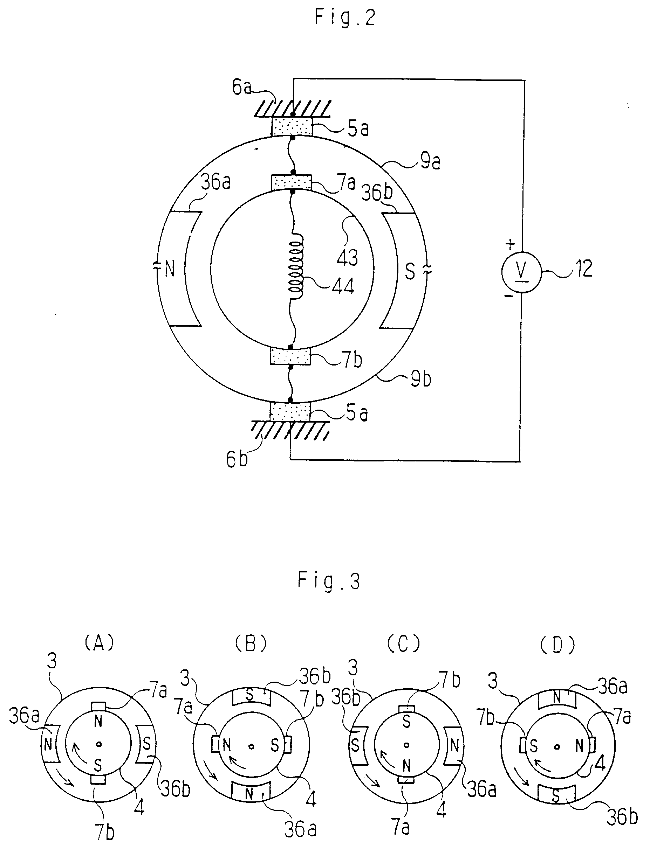

Operation of the rotary machine 1 having the aforegoing construction is now described. If the DC power source 13 is connected to the rotary machine 1, the magnetomotive force is generated in the rotor 4 as above described. If the polarity of the generated magnetomotive force is as shown in Fig.3(A) for example, the magnetic attraction and repulsion force is generated between the rotor 4 and the stator 3 and acts as a rotating force on the rotor 4 and the stator 3, whereby the rotor 4 and the stator 3 are caused to start to rotate clockwise and counter-clockwise, respectively. When the power source 13 is connected, both clutch mechanisms 12a,12b are in an interrupted state and the support body 2 and the stator 3 are rotatable freely with respect to each other, and also the stator 3 and the rotor 4 are rotatable freely.

Since the stator brushes 7a,7b are fixed to the stator 3 as above described, the stator brushes 7a,7b are also rotated with the stator 3. Consequently, in the rotor 4, the rotating direction is clockwise but the generated magnetomotive force is rotated counter-clockwise at the same speed as the rotating speed of the stator 3 and the phase difference with respect to the stator field system at the starting state is maintained. As a result, the magnetic attraction and repulsion force continue to provide the rotating force also after the starting is generated between the rotor 4 and the stator 3, and the rotor 4 and the stator 3 can be rotated clockwise and counterclockwise respectively as shown in sequence of Fig.3 (B), (C), (D).

When the DC power source 13 is connected to the rotary machine 1 in this manner, since the rotor 4 is rotated clockwise for example and the stator 3 is rotated counterclockwise, two rotating forces which are different from each other in the rotating direction can be taken from the rotor output shaft 41 and the stator output shaft 34 to the outside.

When, however, the clutch mechanism 12a is in its coupling condition, the stator 3 is fixed to the support body 2 and use as an ordinary motor also becomes possible. The coupling coefficient between the support body and the stator and between the stator and the rotor is adjusted by the clutch mechanisms 12a, 12b, whereby various output controls can be made.

In this embodiment, the rotor output shaft 41 is exposed to the outside from the housing end surface at the left-hand side in Figure 1 and the stator output shaft 34 is exposed to the outside from the housing end surface at the right-hand side in Figure 1, but the method of leading out the rotor output shaft 41 and of the stator output shaft 34 to the outside is not limited to this. For example, both output shafts 34,41 may be taken from the same housing end surface, and each of the output shafts 34,41 may provide two output shafts respectively (i.e. one at each end).

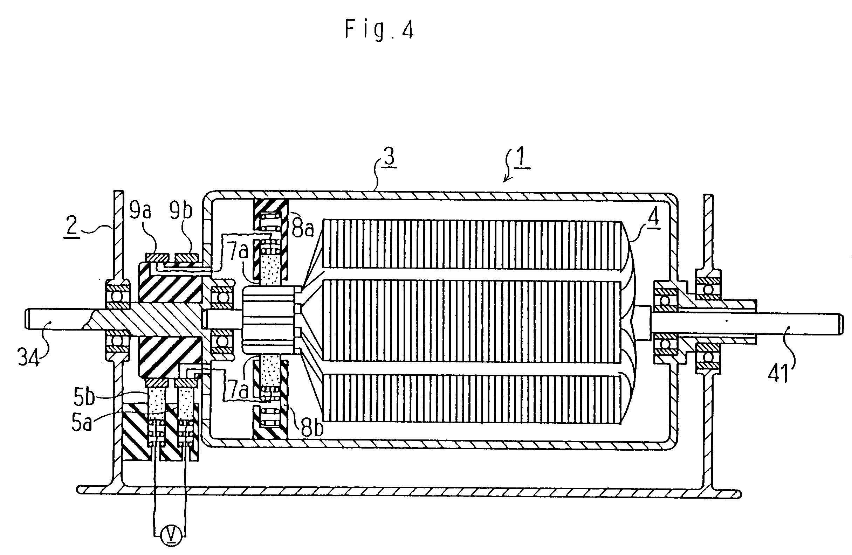

In the first embodiment, the stator 3 and the rotor 4 are enclosed within the housing 2. However, as shown in Fig.4, the stator 3 may be exposed to the outside and supported by the support frame (support body) 2. Reference numerals in Fig.4 designate the same components as in the case of the embodiment of Fig.1. The clutches have been omitted in this drawing for clarity.

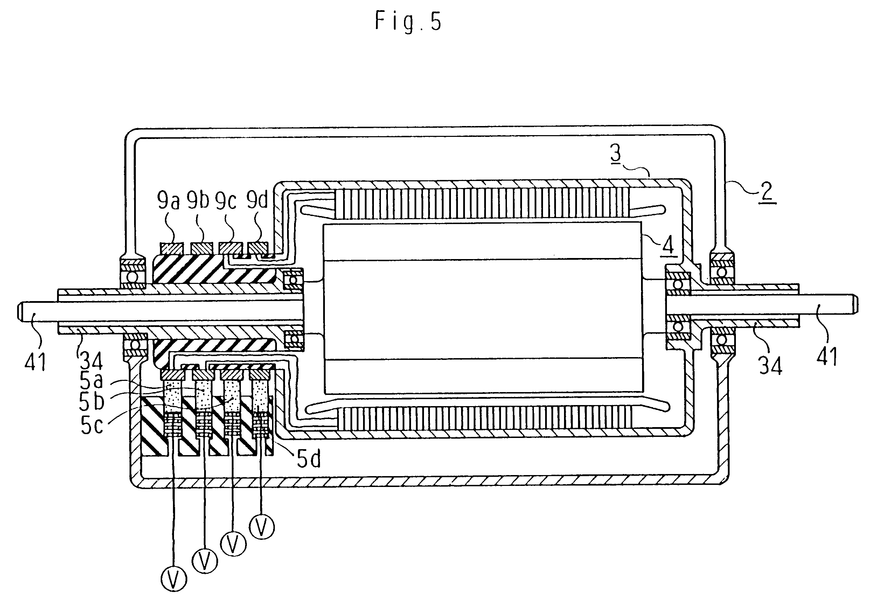

In still another embodiment, the rotary machine may be constructed as a brushless motor or a brushless generator, as shown in Fig.5. In Fig.5, the rotor 4 is a permanent magnet or a cage rotor, and the stator 3 is an armature winding. Among other reference numerals in Fig.5, numerals 5a, 5b, 5c, 5d designate brushes, and numerals 9a, 9b, 9c, 9d designate slip rings. The clutches are again omitted in Fig.5 for clarity.

In the first embodiment, the permanent magnet is used as the field system, but in other embodiments such as that shown in Fig.4, a field coil may be used in the field system. In this case, field current is supplied to the field coil through the slip rings 9a,9b.

The first embodiment shows a two-pole DC motor, but other embodiments may be constructed as DC motors having multiple poles, e.g. four poles.

The first embodiment shows a DC motor, but the invention, of course, can be simply used also as an AC commutator motor having a rotatable stator.

The first embodiment shows a DC motor, but may be used also as a DC generator as it is. In this case, the rotor output shaft 41 and the stator output shaft 34 are, of course, made shafts supplied with the rotating force from the outside, i.e. input shafts.

In the first embodiment, the clutch mechanisms 12a and 12b are installed respectively between the support body 2 and the stator 3 and between the stator 3 and the rotor 4, but other clutch mechanism may be installed between the support body 2 and the rotor 4. Also the two clutch mechanisms 12a,12b may be in the form of brake mechanisms.

An electric deficiency portion may be provided in a part on the circumference of the slip rings 9a,9b, and when torque acting between both output shafts 34,41 attains to a prescribed value, a drive power source is turned off by the deficiency portion of the slip rings 9a,9b, whereby the output shafts 34,41 may be moved in a rocking motion.

According to the invention as above described, in use as a motor, the rotating forces being different from each other in the rotating direction can be taken to the outside by one motor.

Consequently, one output shaft is controlled in rotation whereby the other output shaft is controlled in rotation or the like, and the motor according to the invention can be applied to the fields extending over a wide range, such as industrial robots.

The invention can be used as a single generator having two input shafts, and can be applied as a generator driven by a wide range of power sources.

## Claims

1. A rotary machine comprising
a support body (2);
a stator (3) rotatably supported by the support body (2) and having an input/output shaft (34);
a rotor (4) rotatably supported by the stator (3) and having an input/output shaft (41);
a power transmission means adapted to supply power to the rotor (4) or the stator (3) to cause the rotor and stator to seek to rotate in opposite directions to each other; and
first coupling means (12a) positioned between the support body (2) and the stator (3) for selectively coupling the stator (3) to the support body (2);
characterised by second coupling means (12b) positioned between the stator (3) and the rotor (4) for selectively coupling the stator (3) to the rotor (4).

2. A rotary machine as claimed in claim 1, in the form of a DC motor, wherein the power transmission means comprises brushes (5a,5b) positioned on the support body (2) and slip rings (9a,9b) positioned on the stator (3).

3. A rotary machine as claimed in claim 1, in the form of an AC commutator motor, wherein the power transmission means comprises brushes (5a,5b) positioned on the support body (2) and slip rings (9a,9b) positioned on the stator (3).

4. A rotary machine as claimed in claim 1, wherein said power transmission means is adapted to output electrical power generated by the stator (3) or rotor (4).

## Patentansprüche

1. Rotierende Vorrichtung mit
einem Tragkörper (2);
einem drehbar von dem Tragkörper (2) gelagerten Stator (3) mit einer Eingangs-/Ausgangswelle (34);
einem drehbar von dem Stator (3) gelagerten Rotor (4) mit einer Eingangs-/Ausgangswelle (41);
Leistungsübertragungsmitteln zur Versorgung des Rotors (4) oder des Stators (3) mit Leistung, um es zu veranlassen, daß der Rotor und Stator sich in entgegengesetzte Richtungen zu drehen versuchen; und
zwischen dem Tragkörper (2) und dem Stator (3) positionierte erste Kupplungsmittel (12 a) zum selektiven Ankuppeln des Stators (3) an den Tragkörper (2);
gekennzeichnet durch zwischen dem Stator (3) und dem Rotor (4) positionierte zweite Kupplungsmittel (12 b) zum selektiven Ankuppeln des Stators (3) an den Rotor (4)

2. Rotierende Vorrichtung nach Anspruch 1, in der Form eines Gleichstrommotors, bei dem die Leistungsübertragungsmittel Bürsten (5 a, 5 b), die an dem Tragkörper (2) positioniert sind, und Schleifringe (9 a, 9 b) aufweist, die an dem Stator (3) positioniert sind.

3. Rotierende Vorrichtung nach Anspruch 1, in der Form eines Wechselstromkollektor-Motors, bei dem die Leistungsübertragungsmittel an dem Tragkörper (2) positionierte Bürsten (5 a, 5 b) und an dem Stator (3) positionierte Gleitringe (9 a, 9 b) aufweisen.

4. Rotierende Vorrichtung nach Anspruch 1, bei der die Leistungsübertragungsmittel zur Abgabe elektrischer von dem Stator (3) oder dem Rotor (4) erzeugter Leistung ausgebildet sind.

## Revendications

1. Machine rotative comprenant :
un corps de support (2) ;
un stator (3) supporté en rotation par le corps de support (2) et comportant un arbre d'entrée/sortie (34) ;
un rotor (4) supporté en rotation par le stator (3) et comportant un arbre d'entrée/sortie (41) ;
un moyen de transmission de puissance destiné à fournir de la puissance au rotor (4) ou au stator (3) pour que ce rotor et ce stator cherchent à tourner dans des sens opposés l'un à l'autre ; et
un premier moyen d'accouplement (12a) monté entre le corps de support (2) et le stator (3) pour accoupler sélectivement le stator (3) au corps de support (2) ;
caractérisée par un second moyen d'accouplement (12b) monté entre le stator (3) et le rotor (4) pour accoupler sélectivement le stator (3) au rotor (4).

2. Machine rotative selon la revendication 1, se présentant sous la forme d'un moteur à courant continu, caractérisée en ce que le moyen de transmission de puissance comprend des balais (5a, 5b) montés sur le corps de support (2), et des bagues de glissement (9a, 9b) montées sur le stator (3).

3. Machine rotative selon la revendication 1, se présentant sous la forme d'un moteur de commutateur à courant alternatif, caractérisée en ce que le moyen de transmission de puissance comprend des balais (5a, 5b) montés sur le corps de support (2), et des bagues de glissement (9a, 9b) montées sur le stator (3).

4. Machine rotative selon la revendication 1, caractérisée en ce que le moyen de transmission de puissance est conçu pour fournir en sortie la puissance électrique générée par le stator (3) ou le rotor (4).
